# EUROPEAN PATENT APPLICATION

(11) **EP 4 129 715 A1**
(43) Date of publication of application: **08.02.2023**
(21) Application number: 22188048.7
(22) Date of filing: 01.08.2022
(51) Int. Cl.: B60C 19/00

(54) **CAVITY NOISE REDUCTION TIRE**

(30) Priority: 02.08.2021 KR 20210101476; 02.08.2021 KR 20210101537
(71) Applicant: Kumho Tire Co., Inc., Gwangju 62392 (KR)
(72) Inventor: LIM, Heekyu, 62392 Gwangju (KR); KIM, Seungwon, 62392 Gwangju (KR)
(74) Representative: BCKIP Part mbB

(57) **Abstract**

A cavity noise reduction tire includes an inner liner disposed inside a tire; a sound absorbing part attached to at least a portion of a surface of the inner liner and extending in a first direction parallel to a circumferential direction of the tire; and an adhesive part serving to adhere the sound absorbing part to the surface of the inner liner. At least a portion of the adhesive part extends along a portion adjacent to an edge of the sound absorbing part.

## Description

### TECHNICAL FIELD

The present disclosure relates to a cavity noise reduction tire, and more particularly, to a tire for reducing cavity noise generated during driving under high load conditions.

### BACKGROUND

A pneumatic tire is filled with air to absorb vibrations generated by an uneven road surface during driving of a vehicle, which improves the durability of the vehicle and providing a stable ride to a passenger of the vehicle. Such a tire includes a tread, having a plurality of sipes and grooves formed thereon, in contact with the road surface, so that steering performance and driving performance of the vehicle can be improved.

However, when a vehicle is running, the tire may be excited due to the curvature and surface of the road or the like. The excited tire may allow air to flow in the space between the wheel and the tire. Such a flow of air may generate a noise inside the tire. Due to the structure of the tire, a resonance phenomenon may occur inside the tire, which causes noise that may be transmitted to the inside of the vehicle.

Moreover, in recent years, the development of internal combustion engine vehicles has been decreasing worldwide to reduce carbon dioxide, while the development of electric vehicles is on the rise. Although electric vehicles use the reduced number of parts compared to internal combustion engine vehicles, a battery installed in the electric vehicle has a considerable weight. As the heavy battery is installed in the electric vehicle, the load applied to the tire is significant. Since the engine noise of the electric vehicle is relatively small compared to the engine noise of the internal combustion engine vehicle, tire noise becomes noticeable in the electric vehicle.

### (Prior Art Document)

(Patent Document) Korean Patent No. 10-2092174

### SUMMARY

In view of the above, the present disclosure provides a cavity noise reduction tire using a sound absorbing material in order to reduce noise of the tire.

In accordance with an embodiment of the present disclosure, there is provided a cavity noise reduction tire, including: an inner liner disposed inside a tire; a sound absorbing part attached to at least a portion of a surface of the inner liner and extending in a first direction parallel to a circumferential direction of the tire; and an adhesive part serving to adhere the sound absorbing part to the surface of the inner liner, wherein at least a portion of the adhesive part extends along a portion adjacent to an edge of the sound absorbing part.

A hardness value of the sound absorbing part may be greater than 0 kgf/314 cm² and less than or equal to 9 kgf/314 cm².

The sound absorbing part may include a polyurethane foam.

The hardness value of the sound absorbing part may be measured in such a way that when a force of 3N to 5N is applied to a pressing plate disposed on a test piece of the sound absorbing part, a position of the pressing plate is set as an initial position, and the pressing plate is pressed against the test piece of the sound absorbing part at a speed of 100 ± 20 mm/min until a thickness of the sound absorbing part 100 becomes 75 ± 2.5% of an initial thickness thereof, the pressing is released at the same speed, the test piece of the sound absorbing part is pressed at a speed of 100 ± 20 mm/min until the thickness of the sound absorbing part test piece becomes 25 ± 1% of the initial thickness thereof, and then a magnitude of the pressing force is measured after maintaining the pressing for 20 ± 1 sec.

The sound absorbing part may include a plurality of sound absorbing parts, and the plurality of sound absorbing parts may be attached to the surface of the inner liner to be spaced apart from each other in the first direction.

The edge of each of the sound absorbing parts may include a first edge extending in the first direction and a second edge extending in a second direction perpendicular to the first direction, and the adhesive part may include: a first adhesive part extending in the first direction and disposed adjacent to the first edge of each of the sound absorbing parts; and a second adhesive part extending in the first direction and disposed to be spaced apart from the first adhesive part in the second direction.

The adhesive part may further include a third adhesive part extending in the second direction, and the third adhesive part may be connected to an end of the first adhesive part and an end of the second adhesive part and disposed adjacent to the second edge.

The third adhesive parts disposed opposite to each other on the adjacent sound absorbing parts may be spaced apart from each other in the first direction.

A hardness value of the sound absorbing part in unit of kgf/314cm² may be greater than a tensile strength value of the sound absorbing part in unit of kgf/cm² to prevent the sound absorbing part from being separated from the inner liner.

A ratio of the hardness value to the tensile strength value of the sound absorbing part may range from 2.4 to 8.6.

A ratio of the hardness value to the tensile strength value of the sound absorbing part may be a ratio when the end of the sound absorbing part is not separated from the inner liner when the tire is tested under test conditions of Federal Motor Vehicle Safety Standards No. 139.

The tensile strength value of the sound absorbing part may be a maximum load at the time when the sound absorbing part, which has a predetermined length and includes end portions and a central portion having a width smaller than that of the end portions, is broken by pulling the sound absorbing part outwardly in a longitudinal direction of the sound absorbing part.

According to one embodiment of the present disclosure, the tire can have high durability while reducing cavity noise generated in the tire by preventing the sound absorbing part attached to the inner liner of the tire from being easily separated from the inner liner.

Moreover, the durability of the tire can be improved by finding and applying an optimal ratio of the hardness and tensile strength of the sound absorbing part at which the sound absorbing part is not easily separated from the inner liner.

### BRIEF DESCRIPTION OF THE DRAWINGS

FIG. 1 is a schematic view illustrating a part of a tire according to one an embodiment of the present disclosure.
FIG. 2 is a diagram for explaining that a sound absorbing part is attached to an inner liner of the tire according to one embodiment of the present disclosure.
FIG. 3 is a diagram for explaining measuring of hardness of the sound absorbing part attached to the tire according to one embodiment of the present disclosure.
FIG. 4 is a diagram for explaining measuring of tensile strength of the sound absorbing part attached to the tire according to one embodiment of the present disclosure.
FIG. 5 is a graph illustrating a condition for testing adhesion durability of the sound absorbing part according to one embodiment of the present disclosure.

### DETAILED DESCRIPTION

Hereinafter, specific embodiments for implementing a spirit of the present disclosure will be described in detail with reference to the drawings.

In describing the present disclosure, detailed descriptions of known configurations or functions may be omitted to clarify the present disclosure.

When an element is referred to as being 'connected' to, 'supported' by, 'accessed' to, 'supplied' to, 'transferred' to, or 'contacted' with another element, it should be understood that the element may be directly connected to, supported by, accessed to, supplied to, transferred to, or contacted with another element, but that other elements may exist in the middle.

The terms used in the present disclosure are only used for describing specific embodiments, and are not intended to limit the present disclosure. Singular expressions include plural expressions unless the context clearly indicates otherwise.

Further, in the present disclosure, it is to be noted that expressions, such as the upper side and the lower side, are described based on the illustration of drawings, but may be modified if directions of corresponding objects are changed. For the same reasons, some components are exaggerated, omitted, or schematically illustrated in the accompanying drawings, and the size of each component does not fully reflect the actual size.

Terms including ordinal numbers, such as first and second, may be used for describing various elements, but the corresponding elements are not limited by these terms. These terms are only used for the purpose of distinguishing one element from another element.

In the present specification, it is to be understood that the terms such as "including" are intended to indicate the existence of the certain features, areas, integers, steps, actions, elements, combinations, and/or groups thereof disclosed in the specification, and are not intended to preclude the possibility that one or more other certain features, areas, integers, steps, actions, elements, combinations, and/or groups thereof may exist or may be added.

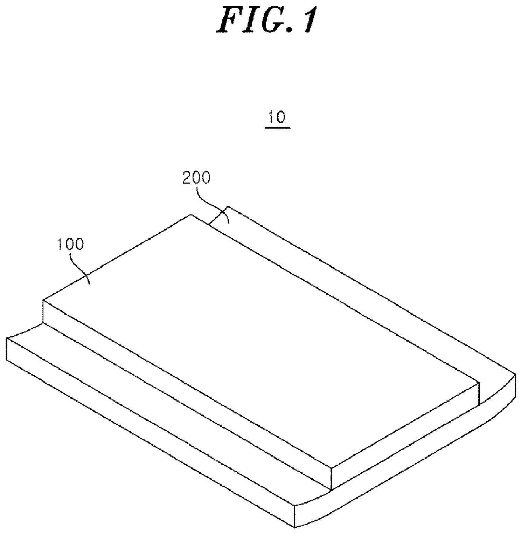

A cavity noise reduction tire 10 according to one embodiment of the present disclosure will be described with reference to the drawings shown in FIGS. 1 to 5. The cavity noise reduction tire 10 according to the present embodiment includes a sound absorbing part 100, an adhesive part 110, and an inner liner 200.

The sound absorbing part 100 is provided to absorb noise generated inside the tire 10. A polyurethane foam may be used as the sound absorbing part 100, and may be provided in a state adhered to the inner liner 200 of the tire 10. As the polyurethane foam is used, a plurality of pores are formed on the surface or inside of the sound absorbing part 100. Accordingly, the sound absorbing part 100 may reduce the air column resonance by converting vibration energy generated as air vibrates into thermal energy. In this way, the sound absorbing part 100 may reduce a cavity noise generated in the tire 10 by reducing a road noise.

As shown in FIG. 1, the sound absorbing part 100 may be attached to the inner liner 200 of the tire 10 through an adhesive. Accordingly, the sound absorbing part 100 may be disposed to protrude from the inner liner 200.

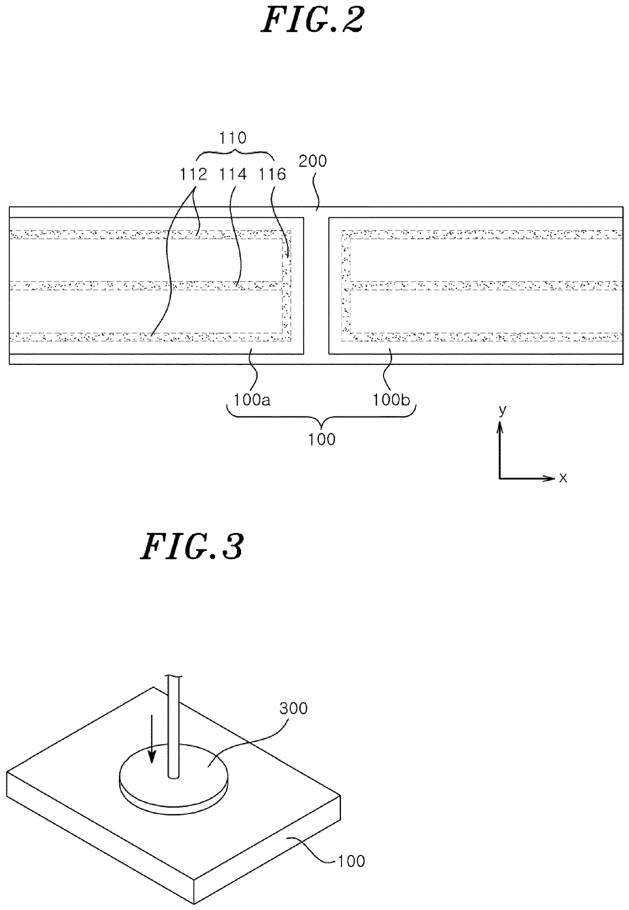

As illustrated in Fig. 2, the sound absorbing part 100 may be disposed on an inner surface of the inner liner 200 of the tire 10 to have a predetermined length. The sound absorbing part 100 may include a plurality of sound absorbing parts 100, and the plurality of sound absorbing parts 100 may be disposed, on the inner surface of the inner liner 200, to be spaced apart from each other by a predetermined distance along a circumferential direction of the tire. For example, the sound absorbing part 100 may include a first sound absorbing part 100a and a second sound absorbing part 100b, and the first sound absorbing part 100a and the second sound absorbing part 100b may be spaced apart from each other at a predetermined distance along the circumferential direction of the tire. Although only two sound absorbing parts 100 are shown in FIG. 2, the present disclosure is not limited thereto, and three or more sound absorbing parts 100 may be adhered to the inner surface of the inner liner 200 at a predetermined interval.

The adhesive part 110 may be an area to which an adhesive is applied. The sound absorbing part 100 may be adhered to the inner liner 200 through an adhesive applied to the adhesive part 110. Further, the adhesive part 110 may be disposed in a region adjacent to the edge of the sound absorbing part 100 and may extend along a longitudinal direction of the sound absorbing part 100.

For example, the adhesive part 110 may be disposed in a first direction parallel to the circumferential direction of the tire or a second direction perpendicular to the first direction. Here, the first direction may be the longitudinal direction of the sound absorbing part 100 in a state in which the sound absorbing part 100 is mounted on the inner liner 200, that is, the x-axis direction shown in FIG. 2. Further, the second direction may refer to the width direction of the sound absorbing part 100, that is, the y-axis direction shown in FIG. 2. The adhesive part 110 may include a first adhesive part 112, a second adhesive part 114, and a third adhesive part 116.

The first adhesive part 112 may extend on the sound absorbing part 100 in the first direction. The first adhesive part 112 may be disposed at a position adjacent to the edge of the sound absorbing part 100, and two first adhesive parts 112 may be respectively disposed adjacent to both side edges of the sound absorbing part 100 in the second direction.

The second adhesive part 114 may be disposed between the two first adhesive parts 112 to extend in the first direction on the sound absorbing part 100. For example, the second adhesive part 114 may be disposed to extend in the first direction at a location spaced apart from the first adhesive part 112 by a predetermined distance to the inner side of the sound absorbing part 100.

The second adhesive part 114 may include one or more second adhesive parts 114 which may disposed between the two first adhesive parts 112 disposed adjacent to both side edges of the sound absorbing part 100 in the second direction.

The third adhesive part 116 may extend in the second direction on the sound absorbing part 100. The third adhesive part 116 may be disposed to connect with one end of the first adhesive part 112 and one end of the second adhesive part 114 in the first direction. Further, the third adhesive part 116 may be disposed adjacent to both ends of the sound absorbing part 100 in the first direction. For example, two third adhesive parts 116 may be disposed adjacent to both ends of the first sound absorbing part 100a in the first direction, respectively. Further, two third adhesive parts 116 may be disposed adjacent to both ends of the second sound absorbing part 100b in the first direction, respectively. In addition, the third adhesive part 116 disposed adjacent to one end of the sound absorbing part 100 is spaced apart from the neighboring third adhesive part 116 disposed adjacent to the other end of the neighboring sound absorbing part 100 in the first direction. For example, referring to FIG. 2, the third adhesive parts 116 disposed adjacent to the opposite ends of the first sound absorbing part 100a and the second sound absorbing part 100b are spaced apart from each other along the first direction and the inner liner 200 may be exposed through a gap between the first sound absorbing part 100a and the second sound absorbing part 100b.

The positions of the adhesive part 110 to which the adhesive is applied may vary as necessary, and the amount of the applied adhesive may vary as necessary. The adhesive included in the adhesive part 110 may be a silicone-based adhesive, and may be composed of components and contents as described in Table 1 below.

**(Table 1)**

| Chemical name | Content (%) |
|---|---|
| Silicone Resin | 40 - 50 % |
| Limestone | 30 - 40 % |
| Calcium carbonate | 1 - 10 % |
| Filler | 1-10% |
| Silazane | 1-10% |
| Silane derivative | 1 - < 10 % |
| Black pigment | 1-10% |
| Octamethylcyclotetrasiloxane | 0.3 - 1 % |
| Quartz (SiO₂), < 1% respirable | 0.1-1 % |

When the sound absorbing part 100 is attached to the inner liner 200 using the adhesive part 110, the inner liner 200 may be washed. When a tire 10 is manufactured, a release agent or a release coating layer may remain in the tire 10 for easy separation. Accordingly, after removing the release agent, foreign materials, and the like in the tire, the adhesive may be applied to the inner liner 200 to adhere the sound absorbing part 100 to the inner liner 200. As the adhesive is applied to the positions adjacent to the edge of the sound absorbing part 100, the sound absorbing part 100 may be more securely adhered to the inner liner 200.

The opposite ends of the neighboring sound absorbing parts 100 in the first direction may be spaced apart by a predetermined distance. Accordingly, the inner liner 200 may include a region in which no sound absorbing material is provided. In order to repair a puncture in the tire 10, a solution of a puncture repair kit (a tire mobility kit, a tire sealant kit, a tire repair kit, etc.) may be injected into the tire. The injected solution of the puncture repair kit may be applied to the inside of the tire through the rotational motion of the tire, and may flow into a damaged portion of the tire to seal the damaged portion.

In this case, in the initial stage in which the solution of the puncture repair kit is applied to the inside of the tire through the rotational motion of the tire, the solution of the puncture repair kit may flow through the sound absorbing part 100, and also flow to a side opposite to the side at which the solution of the puncture repair kit is injected in the tire through the region in which no sound absorbing material is provided without being absorbed into the sound absorbing part 100. Accordingly, the mobility of the solution of the puncture repair kit is improved, so that the solution of the puncture repair kit can be applied more quickly and widely to the inner liner 200.

The tire 10 may be provided with a tread part which contacts a road surface, and a cap fly, a steel belt, the inner liner, and a carcass may be disposed inside the tread part. In the present embodiment, the sound absorbing part 100 may be attached to an inner side of the inner liner 200.

The inner liner 200 is disposed at the innermost side of the tire 10, and the sound absorbing part 100 is disposed in a circular shape on the inner surface of the inner liner 200. In this case, the opposite ends of the sound absorbing parts 100 may be disposed to be spaced apart from each other by a predetermined distance, as shown in FIG. 2.

As the sound absorbing part 100 is disposed at the inner side of the inner liner 200, the sound absorbing part 100 may absorb resonance sound generated in a space between a wheel and the inner liner 200. In this case, it is important that the sound absorbing part 100 is not separated from the inner liner 200 by a load applied to the tire 10. When a load of a given level or more is continuously applied to the tire 10, the sound absorbing part 100 attached to the inner liner 200 by an adhesive may be separated therefrom, and noise and vibration may be caused in the tire 10.

Accordingly, it is necessary to satisfy the durability standard (e.g., Federal Motor Vehicle Safety Standards (FMVSS) No. 139). In general, it is good to have a high tensile strength to ensure durability of the sound absorbing part 100, but as the tensile strength is increased, the hardness of the sound absorbing part 100 increases together. Accordingly, when a load of the given level or more is applied to the tire 10, in case of the sound absorbing part 100 having a high hardness, the possibility that the sound absorbing part 100 is separated from the inner liner 200 of the tire 10 may increase.

As the load applied to the tire 10 increases, the vibration energy generated by the road surface increases, and the vibration energy transmitted to the sound absorbing part 100 increases. Further, as the hardness of the sound absorbing part 100 increases, the vibration energy transmitted to the sound absorbing part 100 increases. Therefore, the higher the hardness of the sound absorbing part 100, the higher the possibility that the sound absorbing part 100 is separated from the inner liner 200 by the transmitted vibration energy.

Accordingly, it is needed to test a tensile strength of the sound absorbing part 100 to stably maintain the durability of the sound absorbing part 100 while adjusting the hardness of the sound absorbing part 100 to prevent the sound absorbing part 100 from being separated from the inner liner 200.

As shown in FIG. 3, hardness of the sound absorbing part 100 may be tested (JIS K 6400-2(D) revised in 2012, I.L.D 25%). A test piece of the sound absorbing part 100 has a square shape with a side of 80 mm to 100 mm, a thickness of 50 ± 2 mm, and a circular pressing plate 300 is disposed on the test piece of the sound absorbing part 100. When a force of 3N to 5N is applied to the pressing plate 300, the position of the pressing plate 300 is set as an initial position, and the pressing plate 300 is pressed against the test piece of the sound absorbing part 100 at a speed of 100 ± 20 mm/min until the thickness of the test piece of the sound absorbing part 100 becomes 75 ± 2.5% of the initial thickness, and then the pressing is released at the same speed. Thereafter, the test piece of the sound absorbing part 100 is pressed at a speed of 100 ± 20 mm/min until the thickness of the test piece of the sound absorbing part 100 becomes 25 ± 1% of the initial thickness, and then the magnitude of the pressing force is measured after maintaining the pressing for 20 ± 1 sec. At this time, the measured magnitude of the force is the hardness value.

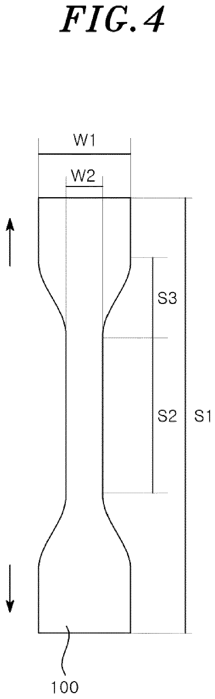

Further, with respect to a test piece of the sound absorbing part 100 having a shape as shown in FIG. 4, a tensile strength of the sound absorbing part 100 is tested (JIS K6400-5 revised in 2012). For example, the test piece used for the tensile strength test of the sound-absorbing part 100 may be manufactured by cutting the test piece of a plate-shaped block into a dumbbell shape. The shape and dimension of the test piece of the sound absorbing part 100 for the tensile strength test according to JIS K6400-5 are set according to dumbbell No. 2, the thickness is set to 10 mm to 15 mm, and the number of test pieces may be set to 5 or more. Further, the thickness deviation of the test pieces is set to fall within ±2%.

On the test piece, two marked lines that are perpendicular to the longitudinal direction (i.e., arrow directions shown in Fig. 4) of the test piece and are parallel to each other are equally marked. Further, a distance between the marked lines is 40 mm or less.

The total length S1 of the test piece may be, for example, 120 ± 5 mm, a length S2 of a concave part may be 40 mm, and a length S3 of a curved part may be 25 mm. In addition, a width W1 of the test piece may be 25 ± 0.5 mm, and a width W2 of the concave part may be 10 ± 0.1 mm.

The tensile strength test speed is 500 ± 50 mm/min, the test piece that is broken at a position outside the range between the marked lines is treated as invalid, and the test is continued until the number of test pieces that are broken at positions within the range between the marked lines becomes 5.

The tensile strength TS may be calculated as TS = (F/A) x 10³ where F is the maximum load (force) at breakage and the unit thereof is N, and A is an average cross-sectional area of the test piece of the sound absorbing part 100 before measurement and the unit thereof is mm².

In this case, the test piece of the sound absorbing part 100 used when testing the hardness thereof as shown in FIG. 3, and the test piece of the sound absorbing part 100 when testing the tensile strength thereof as shown in FIG. 4 may be different from each other. For example, the shape or thickness of the actual sound absorbing part 100 attached to the tire 10 may be different from that of the test piece used when testing the hardness and the tensile strength.

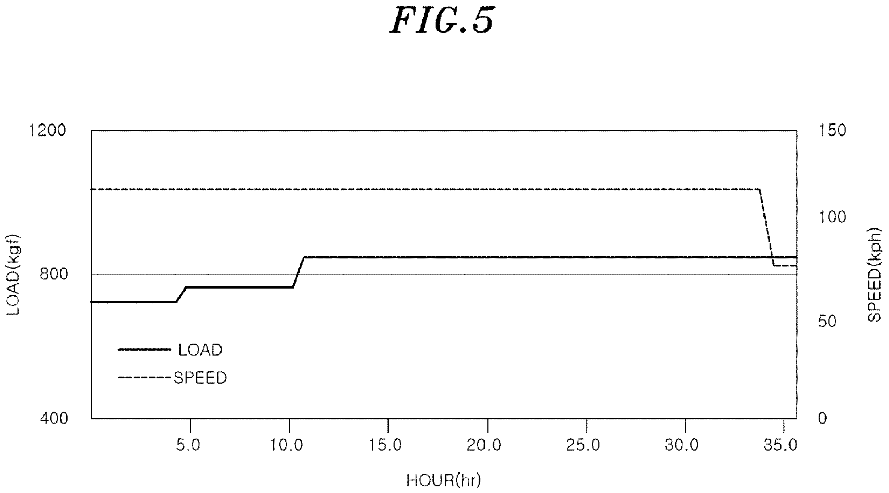

In addition, the sound absorbing part 100, whose hardness and tensile strength have been tested as described above, is tested whether it meets the durability criterion of the tire 10 using conditions as shown in Fig. 5.

In this case, air pressure conditions are shown in Table 2, and speed, load, and time conditions are shown in Table 3.

**(Table 2)**

| Test pressure (psi) | Standard | Extra |
|---|---|---|
| | Load Tire | Load Tire |
| Endurance Test | 26 | 32 |
| Low Inflation Pressure (L.I.P) | 20 | 23 |

**(Table 3)**

| Test Item | | Endurance Test | | | L.I.P |
|---|---|---|---|---|---|
| | | Step 1 | Step 2 | Step 3 | Step 4 |
| Duration | | 4 hr | 6 hr | 24 hr | 1.5 hr |
| Load | | LI 85% | LI 90% | LI 100% | LI 100% |
| Speed | General | 120 km/h | | | |
| | Snow | 110 km/h | | | |

where, LI represents load index, LI 102 indicates the load of 850 Kgf (100%), and the test results performed under the above conditions are shown in Table 4.

**(Table 4)**

| Example | Hardness (kgf/314cm²) | Tensile strength (kgf/cm²) | Ratio (%) (Hardness/Tensile strength) | Result |
|---|---|---|---|---|
| Example A1 | 18.5 | 1 | 18.5 | NG |
| Example A2 | 18.1 | 1 | 18.1 | NG |
| Example A3 | 17.9 | 1 | 17.9 | NG |
| Example A4 | 17.8 | 1 | 17.8 | NG |
| Example A5 | 19.9 | 1.3 | 15.3 | NG |
| Example A6 | 25.8 | 1.7 | 15.2 | NG |
| Example A7 | 16.5 | 1.2 | 13.8 | NG |
| Example A8 | 19.1 | 1.4 | 13.6 | NG |
| Example A9 | 14 | 1.1 | 12.7 | NG |
| Example A10 | 16.2 | 1.4 | 11.6 | NG |
| Example A11 | 14.3 | 1.3 | 11 | NG |
| Example A12 | 15.1 | 1.4 | 10.5 | NG |
| Example A13 | 16.4 | 1.6 | 10.3 | NG |
| Example A14 | 8.6 | 1 | 8.6 | OK |
| Example A15 | 14 | 2.2 | 6.4 | OK |
| Example A16 | 7.6 | 1.2 | 6.3 | OK |
| Example A17 | 7.7 | 1.4 | 5.4 | OK |
| Example A18 | 4.7 | 1.5 | 3.2 | OK |
| Example A19 | 3.1 | 1.3 | 2.4 | OK |

As shown in Table 4, when the ratio of the hardness to the tensile strength of the sound absorbing part 100 ranges from 2.4 to 8.6, it has been confirmed that the sound absorbing part 100 is not separated from the inner liner 200 of the tire 10. Further, in Examples 1 to 13, in which the ratio of the hardness to the tensile strength of the sound absorbing part 100 falls outside the range of 2.4 to 8.6, it has been confirmed that the sound absorbing part 100 is partially or completely separated from the inner liner 200 of the tire 10.

In addition, when a load of a given level or more is applied to the tire 10, the possibility that the sound absorbing part 100 is separated from the inner liner 200 of the tire 10 increases as the hardness of the sound absorbing part 100 increases. The reason that the possibility that the sound absorbing part 100 is separated from the tire 10 increases as the hardness of the sound absorbing part 100 increases, is that vibration energy generated due to the road surface increases as the load applied to the tire 10 increases, which results in an increase in the vibration energy transmitted to the sound absorbing part 100. In this case, the higher the hardness of the sound absorbing part 100, the higher the transmission power of vibration energy, so that the vibration of the sound absorbing part 100 may increase. Accordingly, the possibility that the end of the sound absorbing part 100 is separated from the inner liner 200 by the transmitted vibration energy is higher as the hardness of the sound-absorbing part 100 is higher.

That is, it is possible to find a condition in which the sound absorbing part 100 is not separated from the inner liner 200 of the tire 10 depending on the relationship between the hardness of the sound absorbing part 100 and the position of the adhesive part 110.

Table 5 shows the results of the test to confirm the condition that the sound absorbing part 100 is not separated from the inner liner 200 of the tire 10.

**(Table 5)**

| Example | Hardness (kgf/314cm²) | Attachment of end of sound absorbing part | Result |
|---|---|---|---|
| Example B 1 | 18.5 | X | NG |
| Example B2 | 18.1 | X | NG |
| Example B3 | 17.9 | X | NG |
| Example B4 | 17.8 | X | NG |
| Example B5 | 19.9 | X | NG |
| Example B6 | 25.8 | X | NG |
| Example B7 | 16.5 | X | NG |
| Example B8 | 19.1 | X | NG |
| Example B9 | 14 | X | NG |
| Example B10 | 16.2 | X | NG |
| Example B11 | 14.3 | X | NG |
| Example B12 | 12.5 | X | NG |
| Example B13 | 10.9 | X | NG |
| Example B14 | 10.9 | O | NG |
| Example B15 | 8.6 | X | NG |
| Example B16 | 8.6 | O | OK |
| Example B17 | 7.6 | X | NG |
| Example B18 | 7.6 | O | OK |
| Example B19 | 4.7 | O | OK |
| Example B20 | 3.1 | O | OK |
| Example B21 | 3 | O | OK |

In order to confirm the attachment performance of the sound absorbing part 100, the tests shown in Table 5 were performed at a maximum load (load index) of 75%, a temperature of minus 25 degrees, a driving speed of 60 kph, and a driving distance of 20,000 km which are low temperature durability evaluation conditions.

As shown in Table 5, in case that the adhesive is applied to the end of the sound absorbing part 100 (the position adjacent to the edge of the sound absorbing part 100 in the first direction), it can be seen that the sound absorbing part 100 is separated when the hardness of the sound absorbing part 100 is 10.9 kgf/314cm² and is not separated when the hardness of the sound absorbing part 100 is 8.6 kgf/314cm². Accordingly, it can be seen that when the hardness of the sound absorbing part 100 is 9 kgf/314 cm² or less, the end of the sound absorbing part 100 is not separated from the inner liner 200 of the tire 10.

In addition, the hardness of the sound absorbing material is tested according to the JIS K 6400-2(D) test condition using the pressing plate 300 shown in FIG. 3 described above. In addition, the evaluation results of performing puncture repair using a tire repair kit with respect to the positions where the sound absorbing part 100 are shown in Table 6.

**(Table 6)**

| Example | Hardness (kgf/314cm²) | Puncture position | Attachment of end of sound absorbing part | Result |
|---|---|---|---|---|
| Example C1 | 15.4 | Center of inner liner | X | OK |
| Example C2 | 15.4 | Shoulder of inner liner | X | NG |
| Example C3 | 15.4 | Shoulder of inner liner | O | OK |
| Example C4 | 15.1 | Center of inner liner | X | OK |
| Example C5 | 15.1 | Shoulder of inner liner | X | NG |
| Example C6 | 15.1 | Shoulder of inner liner | O | OK |
| Example C7 | 4.7 | Center of inner liner | X | OK |
| Example C8 | 4.7 | Shoulder of inner liner | X | NG |
| Example C9 | 4.7 | Shoulder of inner liner | O | OK |
| Example C10 | 7.7 | Center of inner liner | X | OK |
| Example C11 | 7.7 | Shoulder of inner liner | X | NG |
| Example C12 | 7.7 | Shoulder of inner liner | O | OK |

When a puncture occurs in the center of the inner liner 200, the puncture repair evaluation is good regardless of the case where the adhesive is applied to the end of the sound absorbing part 100 (the position adjacent to the edge of the sound absorbing part 100 in the first direction). However, when a puncture occurs in the shoulder part of the inner liner 200, in more specifically, when a puncture occurs in the shoulder part of the tread of the tire, the puncture repair evaluation is good only when the adhesive is applied to the end of the sound absorbing part 100.

Accordingly, it can be seen that in case a puncture occurs in the tire 10, the puncture repair evaluation is good when the adhesive part 110 is disposed at the end of the sound absorbing part 100.

The examples of the present disclosure have been described above as specific embodiments, but these are only examples, and the present disclosure is not limited thereto, and should be construed as having the widest scope according to the technical spirit disclosed in the present specification. A person skilled in the art may combine/substitute the disclosed embodiments to implement a pattern of a shape that is not disclosed, but it also does not depart from the scope of the present disclosure. In addition, those skilled in the art can easily change or modify the disclosed embodiments based on the present specification, and it is clear that such changes or modifications also belong to the scope of the present disclosure.

## Claims

1. A cavity noise reduction tire, comprising:
an inner liner disposed inside a tire;
a sound absorbing part attached to at least a portion of a surface of the inner liner and extending in a first direction parallel to a circumferential direction of the tire; and
an adhesive part serving to adhere the sound absorbing part to the surface of the inner liner,
wherein at least a portion of the adhesive part extends along a portion adjacent to an edge of the sound absorbing part.

2. The cavity noise reduction tire of claim 1, wherein a hardness value of the sound absorbing part is greater than 0 kgf/314 cm² and less than or equal to 9 kgf/314 cm².

3. The cavity noise reduction tire of claim 1 or 2, wherein the sound absorbing part includes a polyurethane foam.

4. The cavity noise reduction tire of claim 2 or 3, wherein the hardness value of the sound absorbing part is measured in such a way that when a force of 3N to 5N is applied to a pressing plate disposed on a test piece of the sound absorbing part, a position of the pressing plate is set as an initial position, and the pressing plate is pressed against the test piece of the sound absorbing part at a speed of 100 ± 20 mm/min until a thickness of the sound absorbing part 100 becomes 75 ± 2.5% of an initial thickness thereof, the pressing is released at the same speed, the test piece of the sound absorbing part is pressed at a speed of 100 ± 20 mm/min until the thickness of the sound absorbing part test piece becomes 25 ± 1% of the initial thickness thereof, and then a magnitude of the pressing force is measured after maintaining the pressing for 20 ± 1 sec.

5. The cavity noise reduction tire of any one of claims 1 to 4, wherein the sound absorbing part includes a plurality of sound absorbing parts, and
the plurality of sound absorbing parts are attached to the surface of the inner liner to be spaced apart from each other in the first direction.

6. The cavity noise reduction tire of claim 5, wherein the edge of each of the sound absorbing parts includes a first edge extending in the first direction and a second edge extending in a second direction perpendicular to the first direction, and
wherein the adhesive part comprises:
a first adhesive part extending in the first direction and disposed adjacent to the first edge of each of the sound absorbing parts; and
a second adhesive part extending in the first direction and disposed to be spaced apart from the first adhesive part in the second direction.

7. The cavity noise reduction tire of claim 6, wherein the adhesive part further comprises:
a third adhesive part extending in the second direction,
wherein the third adhesive part is connected to an end of the first adhesive part and an end of the second adhesive part and disposed adjacent to the second edge.

8. The cavity noise reduction tire of claim 7, wherein the third adhesive parts disposed opposite to each other on the adjacent sound absorbing parts are spaced apart from each other in the first direction.

9. The cavity noise reduction tire of any one of claims 1 to 8, wherein a hardness value of the sound absorbing part in unit of kgf/314cm² is greater than a tensile strength value of the sound absorbing part in unit of kgf/cm² to prevent the sound absorbing part from being separated from the inner liner.

10. The cavity noise reduction tire of claim 9, wherein a ratio of the hardness value to the tensile strength value of the sound absorbing part ranges from 2.4 to 8.6.

11. The cavity noise reduction tire of claim 9, wherein a ratio of the hardness value to the tensile strength value of the sound absorbing part is a ratio when the end of the sound absorbing part is not separated from the inner liner when the tire is tested under test conditions of Federal Motor Vehicle Safety Standards No. 139.

12. The cavity noise reduction tire of any one of claims 9 to 11, wherein the tensile strength value of the sound absorbing part is a maximum load at the time when the sound absorbing part, which has a predetermined length and includes end portions and a central portion having a width smaller than that of the end portions, is broken by pulling the sound absorbing part outwardly in a longitudinal direction of the sound absorbing part.
